# EUROPÄISCHE PATENTSCHRIFT

(11) **EP 0 853 203 B1**
(45) Veröffentlichungstag und Bekanntmachung des Hinweises auf die Patenterteilung: **20.12.2000**
(21) Anmeldenummer: 97113473.9
(22) Anmeldetag: 05.08.1997
(51) Int. Cl.: F16D 3/74, F16D 1/08

(54) **Steckbare Zahnkupplung**
Pluggable splined coupling
Accouplement denté enfichable

(30) Priorität: 11.01.1997 DE 29700397 U
(43) Veröffentlichungstag der Anmeldung: 15.07.1998
(73) Patentinhaber: KTR KUPPLUNGSTECHNIK GMBH, D-48432 Rheine (DE)
(72) Erfinder: Schürhörster, Josef, Ing., 48432 Rheine (DE)
(74) Vertreter: Arendt, Helmut, Dipl.-Ing.

(56) Entgegenhaltungen:
- EP-A- 0 247 961
- EP-A- 0 352 344
- GB-A- 2 076 937

## Beschreibung

Die Erfindung betrifft eine steckbare axial- und winkelbewegliche Zahnkupplung zur elastischen Drehmomentübertragung von einer Antriebs- auf eine anzutreibende Maschine, wie im Oberbegriff von Patentanspruch 1 angegeben.

Als drehelastische Kupplungen mit Elementen für die Kompensation radialer, axialer und winkliger Verlagerungen der angeschlossenen Maschinen sind Ausführungen auf dem Markt bekannt, bei welchen die Drehmomentübertragung durch auf Verdrehschub beanspruchte ringförmige Gummielemente ermöglicht wird. Die Verwendung von Verdrehschubelementen bietet große radiale Verlagerungsmöglichkeiten bei relativ geringen Rückstellkräften. Das die radiale Verlagerung ermöglichende ringförmige Gummielement verbindet zwei mit der Antriebsmaschine verbindbare Stahlflansche, die außerdem mit einer innenverzahnten Kupplungshülse verschraubt sind. In die Kupplungshülse greift eine an der anzutreibenden Maschine befestigte, außenverzahnte Kupplungsnabe. Die Montage der Kupplung erfordert jedoch Öffnungen im Gehäuse der Antriebsmaschine. Außerdem sind die Verschraubungsarbeiten umständlich und damit zeitaufwendig.

Um hier Abhilfe zu schaffen, offenbart die DE 37 02 778 C2 eine Kupplung zur Verbindung zweier Maschinen, zwischen welchen eine elastische Drehmomentübertragung stattfinden soll, bei der die zuvor an den Maschinen befestigten Kupplungsteile ineinandergeschoben werden.
Bei einer weiteren steckbaren axial- und winkelbeweglichen Zahnkupplung mit einem mit der Antriebsmaschine lösbar verbundenen Befestigungsflansch und einer an der angetriebenen Maschine befestigbaren Kupplungsnabe zur elastischen Drehmomentübertragung sind mehrere konzentrisch ineinandergefügte, ein Integralbauteil bildende Kupplungsteile vorgesehen. Von diesen ist das Innenteil als starre Kupplungsnabe und das Außenteil als Befestigungsflansch aus einem sehr elastischen Werkstoff ausgeführt. Zusätzlich wird durch eine besondere Außenkontur eine große Flexibilität des Befestigungsflansches erreicht.

Der Erfindung liegt die Aufgabe zugrunde, eine steckbare Kupplung für eine hochelastische Drehmomentübertragung zu schaffen, die komplett vormontiert ohne Ausrichtwerkzeuge an der Antriebsmaschine befestigt werden kann, axiale Wellenverlagerungen über die Steckverbindung kompensiert und sich durch eine einfache Herstellung auszeichnet. Diese Aufgabe wird durch eine steckbare axial- und winkelbewegliche Zahnkupplung zur elastischen Drehmomentübertragung gelöst, die mit
a) einem mit der Antriebsmaschine verbundenen, jedoch lösbaren Befestigungsflansch versehen ist, der durch ein auf Verdrehschub beanspruchtes, ringförmiges Element aus elastomerem Material durch Vulkanisieren mit einem innenverzahnten Kupplungsflansch aus Kunststoff so verbunden ist, daß die Drehmomenteinleitung und -abnahme an den axialen Enden des elastomeren Elements erfolgt,
b) mit einer Kupplungshülse aus Stahl, die mit einer Außenverzahnung in die Verzahnung des Kupplungsflansches greift und mit einer Innenverzahnung formschlüssig und lösbar mit der Welle der angetriebenen Maschine verbunden ist, wobei
c) die Kupplungshülse und der Kupplungsflansch mit ringförmigen, abgesetzten Flächen aneinanderliegen und ein Sicherungsring eine gegenseitige axiale Verschiebung von Kupplungsflansch und Kupplungshülse verhindert.

Vorzugsweise ist die Kupplungshülse aus einem mit einem Außenprofil versehenen Stangenmaterial gefertigt.
Nach einem weiteren vorteilhaften Merkmal sind am Außenumfang des ringförmigen elastomeren Elements Aussparungen zur Aufnahme der Befestigungsschrauben für den Befestigungsflansch der Kupplung vorgesehen. Diese Aussparungen ermöglichen eine Anordnung der Befestigungsschrauben innerhalb des Außenumfangs des elastomeren Elements, so daß auch der Befestigungsflansch im Durchmesser kleingehalten ist und insgesamt eine sehr kompakte Bauweise erzielt wird.

Die Kupplung ist komplett vormontiert einsetzbar. Eine Kupplungsnabe als separates Teil für die Welle der anzutreibenden Maschine entfällt. Die Antriebsmaschine wird über eine einfache Steckmontage mit der angetriebenen Maschine kraftübertragend verbunden, eine Festlegung der Kupplungshülse auf der Welle der anzutreibenden Maschine, beispielsweise Pumpe, erübrigt sich und erlaubt eine Befestigung der Pumpe unmittelbar am Motorgehäuse. Die Montagearbeit beschränkt sich somit auf das Verschrauben des Befestigungsflansches der Kupplung mit der Schwungscheibe der Antriebsmaschine. Die Pumpenwelle ist zur Verbindung nur noch in die Kupplungshülse einzuschieben.

In der Zeichnung ist ein Ausführungsbeispiel der Erfindung schematisch dargestellt und nachstehend erläutert.
Es zeigen:

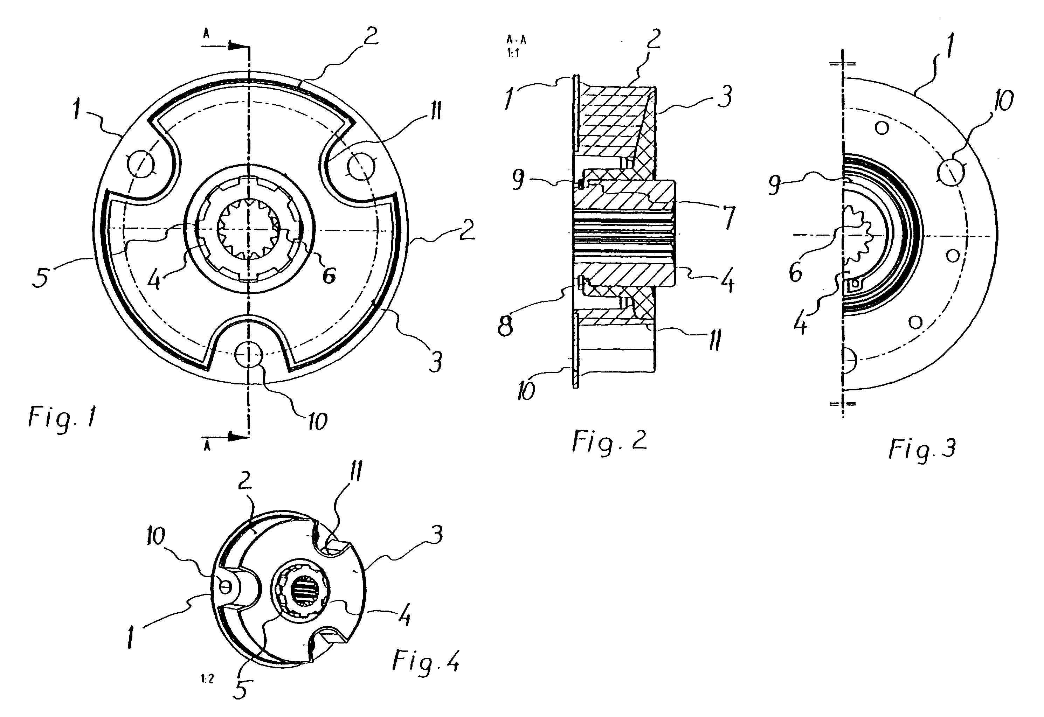

- Figur 1: die der anzutreibenden Maschine zugewandte Frontansicht,
- Figur 2: den Schnitt A-A der Figur 1,
- Figur 3: eine Hälfte der Rückansicht der Kupplung und
- Figur 4: eine schaubildliche Darstellung der Kupplung in halber Größe.

Der Befestigungsflansch 1 der Kupplung, beispielsweise aus Stahl, ist über ein ringförmiges drehelastisches Element 2 aus elastomerem Material mit dem Kupplungsflansch 3 aus Kunststoff verbunden. In den Kupplungsflansch ist eine Kupplungshülse 4 aus Stahl geschoben. Die Kupplungshülse besitzt eine Außenverzahnung 5 und eine Innenverzahnung 6. Durch einen ringförmigen Bund oder Absatz 7, der an einer ringförmigen, abgesetzten Fläche 8 der Hülse anliegt, wird diese innerhalb des Kupplungsflansches 3 genau positioniert und durch einen Ring 9 gegen axiale Verschiebung gesichert.

Der Außenumfang des Befestigungsflansches 1 ist nur geringfügig größer als der des elastomeren Elements 2. Die Befestigungsöffnungen 10 für die nicht dargestellten Schrauben befinden sich deshalb innerhalb des Außendurchmessers des elastomeren Elements 2 und im Bereich von Materialaussparungen 11 des ringförmigen elastomeren Elements und des Kupplungsflansches 3.

Zur Montage wird die in den Figuren der Zeichnung dargestellte Kupplung als fertig vormontierte Einheit zunächst mit einem Schwungrad der Antriebsmaschine verschraubt. Zur Verbindung mit einem anzutreibenden Aggregat wird dessen anzutreibende Welle mit entsprechender Außenverzahnung in die zentrale öffnung mit Innenverzahnung der Kupplungshülse 4 gesteckt. Das anzutreibende Aggregat, beispielsweise eine Pumpe, kann dann festgelegt, beispielsweise mit dem Gehäuse der Antriebsmaschine fest verbunden werden. Weitere, vor allem durch enge räumliche Verhältnisse schwierig auszuführende Montagearbeiten werden vermieden.

## Patentansprüche

1. Steckbare axial- und winkelbewegliche Zahnkupplung zur elastischen Drehmomentübertragung von einer Antriebs- auf eine anzutreibende Maschine, bestehend aus einem mit der Antriebsmaschine lösbar verbundenen Befestigungsflansch (1), der durch ein auf Verdrehschub beanspruchtes, ringförmiges Element (2) aus elastomerem Material durch Vulkanisieren mit einem innenverzahnten Kupplungsflansch (3) aus Kunststoff so verbunden ist, daß die Drehmomenteinleitung und -abnahme an den axialen Enden des elastomeren Elements (2) erfolgt, gekennzeichnet durch
a) eine Kupplungshülse (4) aus Stahl, die mit einer Außenverzahnung (5) in die Verzahnung des Kupplungsflansches (3) greift und mit einer Innenverzahnung (6) formschlüssig und lösbar mit der Welle der angetriebenen Maschine verbunden ist, wobei
b) die Kupplungshülse (4) und der Kupplungsflansch (3) mit ringförmigen, abgesetzten Flächen (7, 8) aneinanderliegen und ein Sicherungsring (9) eine gegenseitige axiale Verschiebung von Kupplungsflansch (3) und Kupplungshülse (4) verhindert.

2. Kupplung nach Anspruch 1, dadurch gekennzeichnet, daß die Kupplungshülse aus einem mit einem Außenprofil versehenen Stangenmaterial gefertigt ist.

3. Kupplung nach Anspruch 1 oder 2, dadurch gekennzeichnet, daß am Außenumfang des ringförmigen elastomeren Elements und des Kupplungsflansches Aussparungen (11) zur Aufnahme von Befestigungsschrauben für den Befestigungsflansch der Kupplung vorgesehen sind.

## Claims

1. Plug-in axially and angularly moveable denture clutch for elastic torque transmission from a driving machine to a machine to be driven, consisting of a fastening flange (1) which is releasably connected to the driving machine and, by means of an annular element (2) subjected to torsional thrust and composed of elastomeric material, is connected by vulcanization to an internally toothed plastic clutch flange (3), in such a way that the introduction and take-off of torque takes place at the axial ends of the elastomeric element (2), characterized by a steel clutch sleeve (4) which engages by means of an external toothing (5) into the toothing of the clutch flange (3) and is positively and releasably connected to the shaft of the driven machine by means of an internal toothing (6), the clutch sleeve (4) and the clutch flange (3) bearing with annular offset faces (7, 8) on one another, and a retaining ring (9) preventing a mutual axial displacement of the clutch flange (3) and clutch sleeve (4).

2. Clutch according to Claim 1, characterized in that the clutch sleeve is manufactured from a bar stock provided with an outer profile.

3. Clutch according to Claim 1 or 2, characterized in that clearances (11) receiving fastening screws for the fastening flange of the clutch are provided on the outer circumference of the annular elastomeric element and of the clutch flange.

## Revendications

1. Accouplement à dents enfichable, déplaçable axialement et angulairement pour la transmission élastique du couple de rotation d'une machine d'entraînement à une machine à entraîner constitué d'une bride de fixation (1) reliée amoviblement à la machine d'entraînement qui est reliée par un élément annulaire (2) en matériau élastomère, sollicité en poussée de torsion, par vulcanisation avec une bride d'accouplement (3) à denture intérieure en matière synthétique de façon que l'introduction et la réception du couple de rotation ait lieu aux extrémités axiales de l'élément élastomère (2), caractérisé par
(a) un manchon d'accouplement (4) en acier qui s'engage avec une denture extérieure (5) dans la denture de la bride d'accouplement (3) et est relié à une denture intérieure (6) par concordance des formes et amoviblement avec l'arbre de la machine entraînée où
(b) le manchon d'accouplement (4) et la bride d'accouplement (3) s'appliquent avec des faces annulaires étagées (7, 8) l'un à l'autre, et une bague de sécurité (9) empêche ur; déplacement axial mutuel de la bride d'accouplement (3) et du manchon d'accouplement (4).

2. Accouplement selon la revendication 1, caractérisé en ce que le manchon d'accouplement est fabriqué en un matériau de barre pourvu d'un profil externe.

3. Accouplement selon la revendication 1 ou 2, caractérisé en ce que sont prévus sur le pourtour extérieur de l'élément élastomère annulaire et de la bride d'accouplement des évidements (11) pour la réception de vis de fixation pour la bride de fixation de l'accouplement.
